# DEMANDE DE BREVET EUROPEEN

(11) **EP 3 932 505 A1**
(43) Date de publication de la demande: **05.01.2022**
(21) Numéro de dépôt: 20183821.6
(22) Date de dépôt: 02.07.2020
(51) Int. Cl.: A63G 7/00, B60N 2/24, B60N 2/42

(54) **SYSTÈME DE MAINTIEN DE PASSAGER POUR MONTAGNES RUSSES**

(71) Demandeur: Bolliger & Mabillard Ingénieurs Conseils S.A., 1870 Monthey (CH)
(72) Inventeur: ZÜRCHER, Alain, 1142 Pampigny (CH); BERRA, Eric, 1870 Monthey (CH)
(74) Mandataire: Noll, Ronald

(57) **Abrégé**

Il est notamment décrit un système de maintien de passager (1) pour montagnes russes conçu afin de maintenir un passager (P) en posture essentiellement assise ou couchée, le système de maintien de passager (1) comprenant une colonne fixe (10) et une colonne de siège (20) conçue pour soutenir et retenir le passager (P), laquelle colonne de siège (20) est couplée à la colonne fixe (10) de manière à être déplaçable par rapport à la colonne fixe (10) lors d'un parcours sur les montagnes russes. La colonne de siège (20) est préférablement couplée à la colonne fixe (10) au moyen d'une liaison articulée (30) et le système de maintien de passager (1) comporte en outre un dispositif d'équilibrage (15) assurant l'équilibrage de la colonne de siège (20), lequel dispositif d'équilibrage (15) est fixé, à une première extrémité (15A), à la colonne fixe (10) et, à une seconde extrémité (15B), à la colonne de siège (20). Le dispositif d'équilibrage (15) peut avantageusement être configuré pour assurer un débattement vertical de la colonne de siège (20) lors du parcours sur les montagnes russes en fonction de l'accélération verticale s'exerçant sur le passager(P).

## Description

### DOMAINE TECHNIQUE

La présente invention se rapporte de manière générale à un système de maintien de passager pour montagnes russes, et plus précisément un tel système de maintien de passager conçu afin de maintenir un passager en posture essentiellement assise ou couchée lors d'un parcours sur les montagnes russes.

### ARRIÈRE-PLAN TECHNOLOGIQUE

De tels systèmes de maintien de passager sont connus dans l'état de la technique, notamment des publications des demandes de brevet européen Nos. EP 0 545 860 A1, EP 1 020 212 A1, EP 1 020 213 A1, EP 1 201 280 A2, et EP 1 215 091 A2, toutes au nom de la présente Demanderesse.

La demande de brevet européen No. EP 0 545 860 A1 décrit une installation de montagnes russes dite « inversée » (ou « inverted coasters ») dans laquelle chaque système de maintien de passager est conçu pour maintenir un passager en posture essentiellement assise lors du parcours sur les montagnes russes, suspendu en-dessous des rails supportant le véhicule portant le système de maintien de passager, les jambes dans le vide, sans paroi ni plancher autour du passager.

La demande de brevet européen No. EP 1 020 212 A1 décrit un système de maintien de passager conçu pour maintenir un passager en posture essentiellement assise dans un siège lors du parcours sur les montagnes russes, les pieds du passager reposant sur un plancher du véhicule portant le système de maintien de passager. Le système de maintien de passager comporte une barre basculante surmontée d'un élément de retenue destiné à maintenir le passager dans le siège, lequel élément de retenue présente une forme particulière destinée à venir au contact des cuisses du passager. Ce type de système de maintien de passager est notamment utilisé dans les installations de montagnes russes à haute vitesse sans inversion (ou « hyper coasters »).

La demande de brevet européen No. EP 1 020 213 A1 décrit une installation de montagnes russes sans plancher (ou « floorless coasters ») dans laquelle chaque système de maintien de passager est conçu pour maintenir un passager en posture essentiellement assise lors du parcours sur les montagnes russes, au-dessus des rails supportant le véhicule portant le système de maintien de passager, les jambes dans le vide, sans plancher sous les pieds du passager.

La demande de brevet européen No. EP 1 201 280 A2 décrit une installation de montagnes russes dite « volante » (ou « flying coasters ») dans laquelle chaque système de maintien de passager est conçu pour maintenir un passager en posture essentiellement couchée lors du parcours sur les montagnes russes, suspendu en-dessous des rails supportant le véhicule portant le système de maintien de passager, le dos du passager disposé sensiblement parallèlement à la voie constituée par les rails. Dans ce cas, le système de maintien de passager comporte par ailleurs un dispositif de retenue des jambes. Une variante d'un tel dispositif de retenue des jambes du passager est également décrite dans la demande de brevet européen No. EP 1 215 091 A2.

Indépendamment de la posture essentiellement assise ou couchée du passager, les systèmes de maintien de passager décrits dans les publications susmentionnées sont tous agencés de sorte à être fixement solidaires du véhicule portant les passagers, sans possibilité de mouvement relatif par rapport audit véhicule lors du parcours sur les montagnes russes. Le mouvement auquel sont soumis les passagers est ainsi directement induit et déterminé par le tracé particulier de la voie empruntée par le véhicule portant les passagers, chaque passager ressentant les sensations résultant des changements de direction et d'accélération définis par ce tracé.

Il subsiste un besoin de proposer un système de maintien de passager en posture essentiellement assise ou couchée qui offre de plus grandes sensations au passager, tout en assurant un confort accru.

### EXPOSÉ DE L'INVENTION

Un but général de la présente invention est donc de proposer un système de maintien de passager en posture essentiellement assise ou couchée qui remédie aux inconvénients des solutions connues.

Plus particulièrement, un but de la présente invention est de proposer une telle solution qui garantisse à la fois une retenue adéquate du passager tout en assurant de plus grandes sensations ainsi qu'un meilleur confort au passager lors du parcours sur les montagnes russes.

Par ailleurs, un but de la présente invention est de proposer une telle solution qui soit robuste et raisonnablement simple à mettre en œuvre.

Un autre but de la présente invention est de proposer une telle solution qui soit fiable et dont la maintenance est facilitée.

Eu égard aux buts susmentionnés, il est proposé, selon la présente invention, un système de maintien de passager pour montagnes russes dont les caractéristiques sont énumérées dans la revendication 1, à savoir un tel système de maintien de passager conçu afin de maintenir un passager en posture essentiellement assise ou couchée, le système de maintien de passager étant notamment caractérisé en ce qu'il comprend une colonne fixe et une colonne de siège conçue pour soutenir et retenir le passager, laquelle colonne de siège est couplée à la colonne fixe de manière à être déplaçable par rapport à la colonne fixe lors d'un parcours sur les montagnes russes. Le système de maintien de passager comporte en outre un dispositif d'équilibrage assurant l'équilibrage de la colonne de siège, lequel dispositif d'équilibrage est fixé, à une première extrémité, à la colonne fixe et, à une seconde extrémité, à la colonne de siège.

Selon un premier aspect de l'invention, la colonne de siège est couplée à la colonne fixe au moyen d'une liaison articulée, et les première et seconde extrémités du dispositif d'équilibrage fixées respectivement à la colonne fixe et à la colonne de siège sont articulées. Selon ce premier aspect de l'invention, et contrairement aux solutions connues, l'on notera donc que le passager est retenu en position assise ou couchée par l'intermédiaire d'une colonne de siège mobile, en l'occurrence par l'intermédiaire d'une liaison articulée entre la colonne de siège et une colonne fixe, la colonne de siège étant équilibrée par le dispositif d'équilibrage afin de maintenir la colonne de siège à distance de la colonne fixe. Ceci offre la possibilité d'un mouvement relatif du passager par rapport au véhicule portant le système de maintien de passager. La liaison articulée assure par ailleurs une grande douceur et souplesse de déplacement. Cette liaison articulée est au demeurant particulièrement simple et compacte, tout en restant robuste.

Selon un mode de réalisation particulièrement préféré de ce premier aspect de l'invention, la liaison articulée comporte un jeu de leviers articulés sur la colonne fixe et sur la colonne de siège et formant une liaison parallélogramme entre la colonne fixe et la colonne de siège. Ceci assure un guidage optimal de la colonne de siège sur la colonne fixe, garantissant par ailleurs que l'orientation de la colonne de siège par rapport à une direction verticale reste inchangée, indépendamment de la position en hauteur de la colonne de siège. L'on comprendra toutefois que l'invention n'est pas spécifiquement limitée à l'utilisation d'un jeu de leviers articulés, tel que décrit et illustré, d'autres configurations de liaisons articulées étant parfaitement envisageables.

Préférablement, le dispositif d'équilibrage s'étend au travers d'un espace intercalaire de la liaison articulée, ce qui conduit à un agencement particulièrement compact.

De manière particulièrement avantageuse, selon un second aspect de l'invention, le dispositif d'équilibrage peut être configuré pour assurer un débattement vertical de la colonne de siège lors du parcours sur les montagnes russes en fonction de l'accélération verticale s'exerçant sur le passager. Ce second aspect est au demeurant applicable indépendamment de la manière avec laquelle la colonne de siège est couplée à la colonne fixe.

Dans ce contexte, le dispositif d'équilibrage peut par ailleurs être équipé d'un système permettant d'ajuster et contrôler la vitesse de débattement vertical de la colonne de siège.

Le dispositif d'équilibrage peut être un dispositif à ressort, tel un ressort à gaz, ou, préférablement, un dispositif hydraulique ou hydropneumatique, en particulier un vérin hydraulique ou hydropneumatique. Dans ce dernier cas, le dispositif d'équilibrage peut alors être équipé d'un régleur de débit de fluide hydraulique permettant d'ajuster et contrôler la vitesse du débattement vertical de la colonne de siège. L'on comprendra toutefois que l'invention n'est pas spécifiquement limitée à l'utilisation d'un dispositif à ressort ou d'un dispositif hydraulique ou hydropneumatique comme dispositif d'équilibrage, d'autres types de dispositifs d'équilibrage étant parfaitement envisageables.

Eu égard à l'utilisation d'un dispositif hydraulique ou hydropneumatique pour l'équilibrage de la colonne de siège, le système de maintien de passager comporte en outre de préférence un accumulateur couplé au dispositif d'équilibrage, lequel accumulateur est apte à générer une pression hydraulique nécessaire à l'équilibrage du poids de la colonne de siège. Cet accumulateur peut en particulier être un accumulateur hydropneumatique.

Toujours dans le contexte de l'utilisation d'un dispositif hydraulique ou hydropneumatique pour l'équilibrage de la colonne de siège, une pression interne du dispositif hydraulique ou hydropneumatique est préférablement ajustable. Cela permet en particulier de modifier et faire varier la sensibilité du système aux accélérations tout au long du parcours sur les montagnes russes. L'intensité de l'effet généré pourra en conséquence varier suivant la pression interne choisie.

Selon une variante préférée, le système de maintien de passager est configuré de sorte que la colonne de siège occupe, en présence du passager et en l'absence de toute accélération verticale autre que celle due à la gravité, une position basse par rapport à la colonne fixe et, plus préférablement encore, de sorte que l'ensemble formé de la colonne de siège et du passager peut s'élever depuis la position basse dès lors que ledit ensemble est soumis à une accélération verticale telle que la force résultante due à l'accélération verticale s'exerçant sur la colonne de siège et le passager devient plus faible que la force de poussée exercée par le dispositif d'équilibrage. En l'absence du passager, la colonne de siège peut indifféremment être équilibrée au moyen du dispositif d'équilibrage de sorte que la colonne de siège occupe une position haute ou basse.

Dans ce dernier contexte, l'on comprendra donc que la colonne de siège et le passager tendront à s'élever depuis la position basse dès lors qu'un certain seuil d'accélération verticale est atteint. Plus précisément, lorsque l'accélération verticale devient inférieure à un certain seuil déterminé par l'équilibre des diverses forces s'exerçant sur la colonne de siège et le passager, par exemple lors du passage d'une bosse, la colonne de siège et le passager retenu par cette dernière tendront à subir une phase ascendante et à quitter la position basse pour s'élever verticalement en direction d'une position haute, voire jusqu'à atteindre la limite de course de la colonne de siège. Dès lors que l'accélération verticale augmente à nouveau pour dépasser ledit seuil. la résultante des forces appliquées tendra à ramener l'ensemble constitué de la colonne de siège et du passager vers la position basse.

Enfin, le dispositif d'équilibrage peut en outre être équipé d'un système d'amortissement, et ainsi limiter les oscillations ainsi que les risques de choc lorsque le système arrive en butée.

Sont également revendiqués, des montagnes russes (ou « roller coaster ») comprenant au moins un système de maintien de passager selon l'invention.

D'autres aspects de l'invention sont exposés dans la suite de la présente description.

### DESCRIPTION SOMMAIRE DES DESSINS

Les caractéristiques et avantages de la présente invention apparaîtront plus clairement à la lecture de la description détaillée qui suit de divers modes de réalisation de l'invention, lesquels sont présentés uniquement à titre d'exemples non limitatifs et sont illustrés par les dessins annexés où :
- la Figure 1 est une vue latérale d'un système de maintien de passager selon un mode de réalisation de l'invention ; et
- la Figure 2 est une vue latérale du système de maintien de passager de la Figure 1 illustrant un débattement vertical dudit système de maintien lors du parcours sur les montagnes russes.

### MODES DE RÉALISATION DE L'INVENTION

La présente invention sera décrite en référence à divers modes de réalisation préférés tels qu'illustrés notamment dans les Figures annexées.

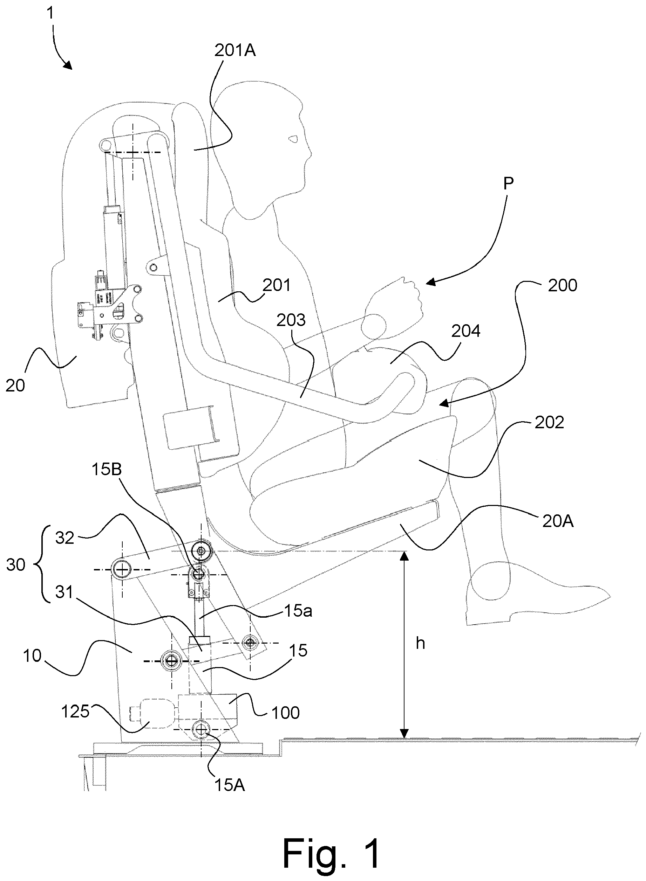

La Figure 1 montre une vue latérale d'un système de maintien de passager pour montagnes russes, lequel système est désigné globalement par la référence numérique 1, selon un mode de réalisation de l'invention. Ce système de maintien de passager 1 est conçu afin de maintenir un passager, également illustré, schématiquement, dans la Figure 1 et désigné par la référence P, lequel passager P est ici supporté et retenu en posture essentiellement assise par le système de maintien de passager 1.

Le système de maintien de passager 1 comporte une colonne fixe 10 qui est fixée par sa base sur une plateforme de support ou peut alternativement faire partie intégrante de cette plateforme de support. Cette plateforme fait typiquement partie d'un véhicule (non représenté) conçu pour se déplacer sur les montagnes russes, typiquement le long de rails. Le passager P est soutenu et retenu par une colonne de siège 20, laquelle est couplée à la colonne fixe 10 de manière à être déplaçable par rapport à la colonne fixe 10 comme cela sera détaillé plus loin. À cet égard, la hauteur h indiquée dans la Figure 1 doit être comprise comme étant variable.

La colonne de siège 20 est pourvue d'un dispositif de retenue 200 configuré pour accueillir le passager P en position assise, lequel dispositif de retenue 200 peut prendre diverses formes. Selon le mode de réalisation illustré à titre d'exemple illustratif dans la Figure 1, le dispositif de retenue 200 comprend pour l'essentiel un dossier 201 fixé à la colonne de siège 20, contre lequel le passager P peut prendre appui, dos placé contre le dossier 201, lequel dossier 201 est par ailleurs pourvu d'un appui-tête 201A et d'une paire d'éléments de retenue latéraux configurés pour enserrer le passager P au niveau du dos et des bras. Le dispositif de retenue 200 comporte par ailleurs une assise 202 portée par un support 20A de la colonne de siège 20, laquelle assise 202 est également munie d'une paire d'élément de retenue latéraux enserrant le passager au niveau des hanches et des cuisses à la manière d'un siège baquet. Le dispositif de retenue 200 comporte également une barre de sécurité frontale 203, montée pivotante sur une partie supérieure de la colonne de siège 20, et conçue pour être abaissée au-dessus et autour du torse du passager P. Cette barre de sécurité frontale 203 comporte ici, sur son extrémité distale, un élément de retenue 204 qui vient en appui contre l'abdomen et la partie supérieure des cuisses du passager P lorsque la barre de sécurité frontale 203 est abaissée. Cette barre de sécurité est typiquement verrouillée en position, une fois positionnée sur les cuisses du passager par un dispositif de verrouillage adéquat.

L'on comprendra que l'invention n'est pas spécifiquement limitée à un système de maintien de passager comportant un dispositif de retenue 200 tel que spécifiquement illustré, d'autres configurations de dispositifs de retenue étant parfaitement envisageables.

Selon un premier aspect de l'invention, la colonne de siège 20 est couplée à la colonne fixe 10 au moyen d'une liaison articulée désignée par la référence numérique 30 et le système de maintien de passager 1 comporte en outre un dispositif d'équilibrage assurant l'équilibrage de la colonne de siège 20, lequel dispositif d'équilibrage exerce une force de poussée verticale de direction opposée au poids exercé par la colonne de siège 20 et de nature à compenser partiellement ou totalement le poids exercé par la colonne de siège 20. Ce dispositif d'équilibrage comprend ici préférablement un vérin hydraulique (ou hydropneumatique) 15 fixé, à une première extrémité articulée 15A, à la colonne fixe 10 et, à une seconde extrémité articulée 15B, à la colonne de siège 20. Dans la variante de réalisation préférée illustrée, la référence 15a désigne un piston du vérin hydraulique 15, solidaire, à l'extrémité articulée 15B, de la colonne de siège 20.

La liaison articulée 30 peut prendre des formes variées. A titre préféré, comme illustré, cette liaison articulée 30 comporte un jeu de leviers, respectivement inférieurs 31 et supérieurs 32, formant avantageusement une liaison parallélogramme entre la colonne fixe 10 et la colonne de siège 20. Plus précisément, la liaison articulée 30 comprend ici une paire de leviers inférieurs 31 articulés à chaque extrémité à la colonne fixe 10, d'une part, et à la colonne de siège 20, d'autre part. De même, la liaison articulée 30 comprend une paire de leviers supérieurs 32, dont la longueur effective est identique à la longueur effective des leviers inférieurs 31, lesquels leviers supérieurs 32 sont de même articulés à chaque extrémité à la colonne fixe 10, d'une part, et à la colonne de siège 20, d'autre part.

L'on pourra immédiatement relever la configuration très compacte de la liaison articulée 30. La géométrie de la liaison articulée 30 est préférablement choisie de manière à ce que la colonne de siège 20 puisse se déplacer selon une trajectoire essentiellement verticale, étant toutefois relevé que la liaison parallélogramme induit un mouvement relatif entre la colonne fixe 10 et la colonne de siège 20 selon une trajectoire en arc de cercle, l'amplitude du mouvement étant déterminée par l'amplitude de travail effective du dispositif d'équilibrage 15. À ce titre, la Figure 1 montre le système de maintien 1 dans une configuration où la colonne de siège 20 est placée dans une position haute, le vérin hydraulique 15 étant illustré dans une position où le piston 15a est presque entièrement déployé.

Les extrémités 15A, 15B du dispositif d'équilibrage 15 sont ici articulées, en ce sens que le dispositif d'équilibrage 15 subit un léger mouvement en rotation autour d'un axe coïncidant avec l'extrémité inférieure 15A du dispositif d'équilibrage 15 en fonction du positionnement de la colonne de siège 20 par rapport à la colonne fixe 10, engendrant un mouvement relatif correspondant du dispositif d'équilibrage 15 par rapport à la colonne fixe 10 et à la colonne de siège 20. Plus spécifiquement, dans l'exemple illustré à la Figure 1, la partie inférieure du dispositif d'équilibrage 15 est solidaire d'un élément de support 100 qui est articulé sur la colonne fixe 10 au niveau de l'extrémité articulée 15A. Cet élément de support 100 est lui aussi articulé en ce sens qu'il suit le mouvement du dispositif d'équilibrage 15 et subit donc un mouvement relatif correspondant par rapport à la colonne fixe 10. Cet élément de support 100 est monté, avec le dispositif d'équilibrage associé 15, à l'intérieur d'un logement pratiqué dans la colonne fixe 10.

A titre avantageux, le dispositif d'équilibrage 15 s'étend au travers d'un espace intercalaire de la liaison articulée 30, ici au travers de l'espace formé entre les leviers inférieurs 31.

L'utilisation d'une liaison articulée entre la colonne fixe 10 et la colonne de siège 20, telle la liaison articulée 30 illustrée dans la Figure 1, offre un mouvement aisé ainsi qu'une grande douceur et souplesse de déplacement. Cette liaison articulée est au demeurant simple et compacte, tout en restant robuste.

En lieu et place du vérin hydraulique (ou hydropneumatique) 15 illustré, il est envisageable le cas échéant de faire appel à un dispositif à ressort, tel un ressort à gaz, comme dispositif d'équilibrage, ou tout autre dispositif d'équilibrage adéquat.

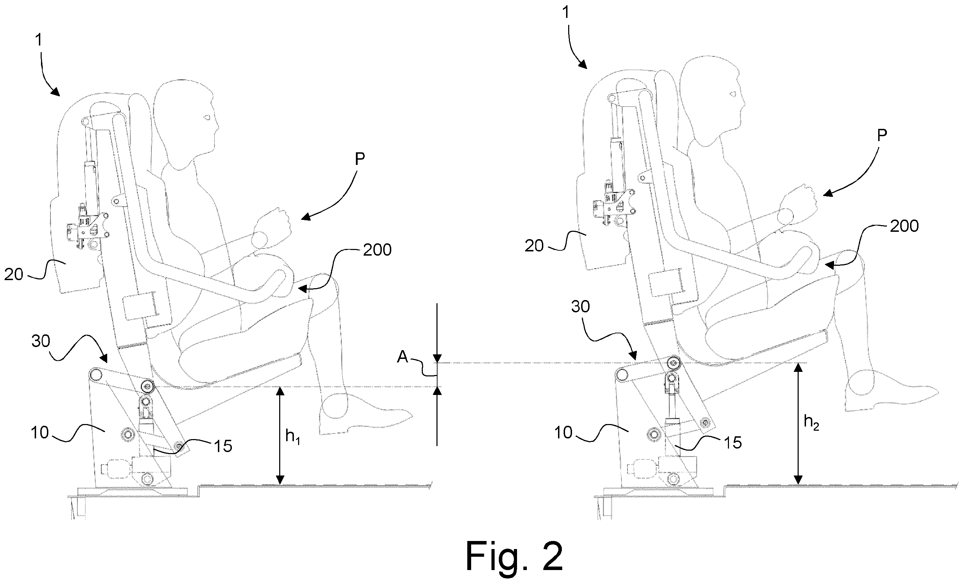

Plus avantageusement encore, selon un autre aspect de l'invention qui est applicable indépendamment de la liaison articulée susmentionnée, le dispositif d'équilibrage 15 est configuré pour assurer un débattement vertical de la colonne de siège 20 lors du parcours sur les montagnes russes, et ce en fonction de l'accélération verticale s'exerçant sur le passager P. Ce débattement vertical vise à permettre au passager P de subir un mouvement vertical en fonction du tracé suivi par le véhicule portant le passager P, selon une phase ascendante et une phase descendante, mouvement dont l'amplitude peut être variable. La Figure 2 montre le système de maintien de passager 1 en position basse (à gauche), la colonne de siège 20 disposée à une première hauteur h₁ par rapport au plancher, et en position haute (à droite), la colonne de siège 20 disposée à une seconde hauteur h₂ par rapport au plancher. L'amplitude maximale du mouvement vertical de la colonne de siège 20 et du passager P porté par cette dernière est mise en évidence dans la Figure 2 et désignée par la référence A.

Selon le mode de réalisation discuté, la position haute correspond préférablement à la position occupée par la colonne de siège 20 en l'absence du passager P. En d'autres termes, le système de maintien de passager 1 est ici configuré de sorte que la colonne de siège 20 est équilibrée afin d'occuper une position haute par rapport à la colonne fixe 10 en l'absence du passager P. Avant le début de la phase d'embarquement des passagers, chaque système de maintien de passager 1 est ainsi par défaut équilibré en position haute, c'est-à-dire que le dispositif d'équilibrage 15 prend une position déployée amenant la colonne de siège 20 en position haute. Lors de la phase d'embarquement, dès lors que le passager P prend place sur le siège, l'ajout du poids du passager P engendre une rupture de l'équilibre des forces de l'ensemble, ce qui a pour effet d'amener la colonne de siège 20 en position basse par rapport à la colonne fixe 10.

Il est toutefois alternativement possible de configurer le système de maintien de passager 1 de sorte que la colonne de siège 20 soit équilibrée afin d'occuper une position basse par rapport à la colonne fixe 10 même en l'absence du passager P. Dans ce cas, l'on comprendra donc que la colonne de siège 20 occupera déjà par défaut une position basse lors de la phase d'embarquement et que la force de poussée exercée par le dispositif d'équilibrage 15 sera comparativement plus faible que dans le cas précédemment mentionné.

Dans les deux cas de figure, l'on comprendra que l'ensemble constitué de la colonne de siège 20 et du passager P retenu par cette dernière occupera par défaut la position basse en l'absence de toute accélération verticale autre que celle due à la gravité (étant entendu que l'on parle ici de l'accélération verticale due à la gravité terrestre équivalant à 9.81 m/s²) et ce tant que l'accélération verticale ne diminuera pas en-dessous d'un certain seuil déterminé par l'équilibre des forces appliquées, à savoir en particulier la force due à l'accélération verticale s'exerçant sur le colonne de siège 20 et le passager P (incluant la force due à la gravité et à l'accélération verticale causée par le trajet sur les montagnes russes) et la force de poussée exercée par le dispositif d'équilibrage 15.

Lorsque le véhicule portant les passagers P quitte la zone d'embarquement, et tant que l'accélération verticale reste élevée et telle que la force résultante s'exerçant sur la colonne de siège 20 et le passager P est supérieure à la force de poussée du dispositif d'équilibrage 15, le système se maintient de lui-même en position basse.

Préférablement, le système de maintien de passager 1 est ici configuré de sorte à s'élever depuis la position basse dès lors que l'ensemble constitué de la colonne de siège 20 et du passager P est soumis à une accélération verticale telle que la force résultante s'exerçant sur l'ensemble devient plus faible que la force de poussée exercée par le dispositif d'équilibrage 15, ce qui se produit par exemple lors du passage d'une bosse. La colonne de siège 20 et le passager P retenu par cette dernière tendront ainsi à quitter la position basse et à s'élever verticalement (phase ascendante) en direction de la position haute, voire jusqu'à atteindre la limite de course de la colonne de siège 20.

Dès lors que l'accélération verticale augmente à nouveau pour atteindre une valeur telle que la force résultante s'exerçant sur la colonne de siège 20 et le passager P redevient supérieure à la force de poussée du dispositif d'équilibrage 15, la colonne de siège 20 et le passager P retenu par cette dernière tendront à retourner en position basse (phase descendante).

À cet égard, il est préférable d'équiper le dispositif d'équilibrage 15 d'un système d'amortissement, ce qui permet notamment de réduire tout phénomène d'oscillation et d'éviter une arrivée en butée franche lors de la phase ascendante ou descendante. Il peut indépendamment s'agir d'un système d'amortissement interne ou externe. L'on comprendra que cet amortissement est effectif pour chaque cycle de mouvement de la colonne de siège 20.

Comme déjà mentionné ci-dessus, le débattement vertical de la colonne de siège 20 peut être mis en œuvre indépendamment de l'utilisation d'une liaison articulée 30 entre la colonne fixe 10 et la colonne de siège 20. À titre d'exemple alternatif, le débattement vertical du dispositif d'équilibrage 15 pourrait de même être mis en œuvre dans le cadre d'un système de maintien où la colonne de siège serait guidée par rapport à la colonne fixe au moyen de glissières ou coulisses.

Comme l'on peut le voir sur la Figure 1, le vérin hydraulique 15 est préférablement couplé à un accumulateur 125, lequel accumulateur 125 est apte à générer une pression hydraulique nécessaire à l'équilibrage du poids de la colonne de siège 20. Cet accumulateur 125 peut notamment être un accumulateur hydropneumatique, en particulier un accumulateur hydropneumatique du type à vessie, laquelle est remplie d'un gaz (par exemple de l'azote) qui agit comme fluide compressible et permet d'accumuler de l'énergie. Dans le cas d'espèce, cette énergie accumulée est exploitée pour générer la pression hydraulique nécessaire à l'équilibrage du poids de la colonne de siège 20, à savoir pour compenser la force exercée sur le vérin hydraulique 15 par le poids de la colonne de siège 20. Comme illustré dans la Figure 1, l'accumulateur 125 est avantageusement porté par l'élément de support 100 précédemment mentionné. L'ensemble constitué du vérin hydraulique 15, de l'accumulateur 125 et de l'élément de support 100 forme dès lors un agencement particulièrement compact et qu'il est aisé d'intégré dans le système.

Dans l'exemple illustré où le dispositif d'équilibrage 15 est de nature hydraulique (ou hydropneumatique), il est particulièrement avantageux de prévoir des moyens permettant un ajustement de la pression interne du dispositif hydraulique (ou hydropneumatique). Ceci permet de faire varier la sensibilité du dispositif d'équilibrage 15 (et donc de l'ensemble du système) à l'accélération verticale exercée tout au long du parcours sur les montagnes russes. L'intensité de l'effet pourra en conséquence varier suivant la pression interne choisie.

Par ailleurs, le dispositif d'équilibrage 15 peut être équipé d'un système permettant d'ajuster et contrôler la vitesse du débattement vertical de la colonne de siège 20. Dans l'exemple illustré, ceci peut être réalisé par l'adjonction d'un régleur de débit de fluide hydraulique de manière à ajuster la vitesse du piston 15a aussi bien lors de son ouverture (en phase ascendante) que lors de sa fermeture (en phase descendante). Ce régleur de débit peut être interne au vérin hydraulique 15 ou externe, à savoir placé dans le circuit hydraulique associé au vérin 15.

L'on comprendra de manière générale que diverses modifications et/ou améliorations évidentes pour l'homme du métier peuvent être apportées aux modes de réalisation décrits dans la présente description sans sortir du cadre de l'invention défini par les revendications annexées. En particulier, la liaison articulée et le débattement vertical sont deux fonctions distinctes qui peuvent être appliquées séparément l'une de l'autre, ou, très avantageusement, en combinaison.

Par ailleurs, bien que les Figures montrent un mode de réalisation où un accumulateur dédié est associé au système de maintien, d'autres solutions sont envisageables. Par exemple, dans une variante, un accumulateur centralisé, de plus grande capacité, pourrait être couplé à plusieurs systèmes de maintien, en particulier à chaque système de maintien d'une même rangée de passagers ou d'un même véhicule. En pareil cas, l'on comprendra donc que l'accumulateur ne sera plus nécessairement disposé sur et intégré à chaque système de maintien, mais sera disposé au voisinage de la rangée de passagers concernée ou sur le véhicule concerné et que l'ensemble des systèmes hydrauliques des divers systèmes de maintien seront alors couplés à un même accumulateur centralisé.

Par ailleurs, bien que les Figures 1 et 2 montrent un système de maintien de passager en posture essentiellement assise où la colonne fixe est disposée sur le plancher d'un véhicule, l'on comprendra que le même principe est applicable dans l'hypothèse d'une installation inversée où le système de maintien de passager est suspendu sous un véhicule à l'image de l'installation décrite dans la demande de brevet européen No. EP 0 545 860 A1. L'invention est de même également applicable à une installation volante où les systèmes de maintien de passager sont conçus pour supporter et retenir les passagers en posture essentiellement couchée à l'image de l'installation décrite dans la demande de brevet européen No. EP 1 201 280 A2.

De plus, et indépendamment de ce qui précède, la colonne fixe peut indifféremment être constituée d'un élément fixé à la plateforme de support ou au châssis du véhicule portant le système de maintien de passager ou faire partie intégrante de cette plateforme de support ou de ce châssis.

### LISTE DES SIGNES DE RÉFÉRENCE UTILISÉS DANS LA PRÉSENTE DESCRIPTION ET DANS LES DESSINS

- 1: système de maintien de passager selon un mode de réalisation de l'invention
- 10: colonne fixe
- 15: dispositif d'équilibrage, en particulier dispositif hydraulique ou hydropneumatique (par ex. vérin hydraulique ou hydropneumatique)
- 15a: piston du vérin hydraulique ou hydropneumatique 15
- 15A: extrémité inférieure du dispositif d'équilibrage 15, articulée à la colonne fixe 10
- 15B: extrémité supérieure du dispositif d'équilibrage 15 (extrémité supérieure du piston 15a), articulée à la colonne de siège 20
- 20: colonne de siège, déplaçable verticalement par rapport à la colonne fixe 10
- 20A: support d'assise
- 30: liaison articulée entre la colonne fixe 10 et la colonne de siège 20 / liaison parallélogramme
- 31: paire de leviers inférieurs de la liaison articulée 30
- 32: paire de leviers supérieurs de la liaison articulée 30
- 100: élément de support monté à l'extrémité inférieure 15A du dispositif d'équilibrage 15 et monté à l'intérieur d'un logement pratiqué dans la colonne fixe 10
- 125: accumulateur pour l'équilibrage du poids de la colonne de siège 20 (en particulier accumulateur hydropneumatique)
- 200: dispositif de retenue du passager P solidaire de la colonne de siège 20
- 201: dossier avec éléments de retenue latéraux
- 201A: appui-tête intégré au dossier 201
- 202: assise avec éléments de retenue latéraux
- 203: barre de sécurité frontale montée pivotante sur la colonne de siège 20
- 204: élément de retenue monté à l'extrémité distale de la barre de sécurité frontale 203
- P: passager en posture essentiellement assise
- h: hauteur (variable) de la colonne de siège 20
- h₁: hauteur de la colonne de siège 20 en position basse
- h₂: hauteur de la colonne de siège 20 en position haute
- A: amplitude du débattement de la colonne de siège 20

## Revendications

1. Un système de maintien de passager (1) pour montagnes russes conçu afin de maintenir un passager (P) en posture essentiellement assise ou couchée,
**caractérisé en ce que** le système de maintien de passager (1) comprend une colonne fixe (10) et une colonne de siège (20) conçue pour soutenir et retenir le passager (P), laquelle colonne de siège (20) est couplée à la colonne fixe (10) de manière à être déplaçable par rapport à la colonne fixe (10) lors d'un parcours sur les montagnes russes,
et **en ce que** le système de maintien de passager (1) comporte en outre un dispositif d'équilibrage (15) assurant l'équilibrage de la colonne de siège (20), lequel dispositif d'équilibrage (15) est fixé, à une première extrémité (15A), à la colonne fixe (10) et, à une seconde extrémité (15B), à la colonne de siège (20).

2. Le système de maintien de passager (1) selon la revendication 1, **caractérisé en ce que** la colonne de siège (20) est couplée à la colonne fixe (10) au moyen d'une liaison articulée (30),
et **en ce que** les première et seconde extrémités (15A, 15B) du dispositif d'équilibrage (15) fixées respectivement à la colonne fixe (10) et à la colonne de siège (20) sont articulées.

3. Le système de maintien de passager (1) selon la revendication 2, **caractérisé en ce que** la liaison articulée (30) comporte un jeu de leviers (31, 32) articulés sur la colonne fixe (10) et sur la colonne de siège (20) et formant une liaison parallélogramme entre la colonne fixe (10) et la colonne de siège (20).

4. Le système de maintien de passager (1) selon la revendication 2 ou 3, **caractérisé en ce que** le dispositif d'équilibrage (15) s'étend au travers d'un espace intercalaire de la liaison articulée (30).

5. Le système de maintien de passager selon l'une quelconque des revendications précédentes, **caractérisé en ce que** le dispositif d'équilibrage (15) est configuré pour assurer un débattement vertical de la colonne de siège (20) lors du parcours sur les montagnes russes en fonction de l'accélération verticale s'exerçant sur le passager (P).

6. Le système de maintien de passager (1) selon la revendication 5, **caractérisé en ce que** le dispositif d'équilibrage (15) est équipé d'un système permettant d'ajuster et contrôler la vitesse du débattement vertical de la colonne de siège (20).

7. Le système de maintien de passager (1) selon l'une quelconque des revendications précédentes, **caractérisé en ce que** le dispositif d'équilibrage (15) est un dispositif à ressort, en particulier un ressort à gaz.

8. Le système de maintien de passager (1) selon l'une quelconque des revendications 1 à 6, **caractérisé en ce que** le dispositif d'équilibrage (15) est un dispositif hydraulique ou hydropneumatique, en particulier un vérin hydraulique ou hydropneumatique.

9. Le système de maintien de passager (1) selon la revendication 6, **caractérisé en ce que** le dispositif d'équilibrage (15) est un dispositif hydraulique ou hydropneumatique, en particulier un vérin hydraulique ou hydropneumatique,
et **en ce que** le dispositif d'équilibrage (15) est équipé d'un régleur de débit de fluide hydraulique permettant d'ajuster et contrôler la vitesse du débattement vertical de la colonne de siège (20).

10. Le système de maintien de passager (1) selon la revendication 8 ou 9, **caractérisé en ce que** le système de maintien de passager (1) comporte en outre un accumulateur (125) couplé au dispositif d'équilibrage (15) et apte à générer une pression hydraulique nécessaire à l'équilibrage du poids de la colonne de siège (20), lequel accumulateur (125) est préférablement un accumulateur hydropneumatique.

11. Le système de maintien de passager (1) selon l'une quelconque des revendications 8 à 10, **caractérisé en ce qu'**une pression interne du dispositif hydraulique ou hydropneumatique est ajustable.

12. Le système de maintien de passager (1) selon l'une quelconque des revendications précédentes, **caractérisé en ce que** le système de maintien de passager (1) est configuré de sorte que la colonne de siège (20) occupe, en présence du passager (P) et en l'absence de toute accélération verticale autre que celle due à la gravité, une position basse par rapport à la colonne fixe (10).

13. Le système de maintien de passager (1) selon la revendication 12, **caractérisé en ce que** le système de maintien de passager (1) est configuré de sorte que l'ensemble formé de la colonne de siège (20) et du passager (P) peut s'élever depuis la position basse dès lors que ledit ensemble est soumis à une accélération verticale telle que la force résultante s'exerçant sur la colonne de siège (20) et le passager (P) devient plus faible que la force de poussée exercée par le dispositif d'équilibrage (15).

14. Le système de maintien de passager (1) selon l'une quelconque des revendications précédentes, **caractérisé en ce que** le dispositif d'équilibrage (15) est équipé d'un système d'amortissement.

15. Montagnes russes comprenant au moins un système de maintien de passager (1) selon l'une quelconque des revendications précédentes.
